# EUROPÄISCHE PATENTSCHRIFT

(11) **EP 2 790 297 B1**
(45) Veröffentlichungstag und Bekanntmachung des Hinweises auf die Patenterteilung: **02.08.2017**
(21) Anmeldenummer: 13162732.5
(22) Anmeldetag: 08.04.2013
(51) Int. Cl.: H02K 1/27

(54) **Läufer für eine elektrische Maschine**
Rotor for an electric machine
Rotor pour une machine électrique

(43) Veröffentlichungstag der Anmeldung: 15.10.2014
(73) Patentinhaber: Siemens Aktiengesellschaft, 80333 München (DE)
(72) Erfinder: Dorfner, Matthias, 84375 Kirchdorf am Inn (DE); Matscheko, Gerhard, 82319 Starnberg (DE)

(56) Entgegenhaltungen:
- EP-A1- 1 850 454
- WO-A2-2012/120485
- DE-A1-102011 000 439

## Beschreibung

Die vorliegende Erfindung betrifft einen Läufer für eine elektrische Maschine sowie eine elektrische Maschine mit einem Stator und einem Läufer.

Gattungsgemäße elektrische Maschinen mit bewegbaren Einheiten in Form von Läufern sind dem Grunde nach im Stand der Technik bekannt, sodass es eines gesonderten druckschriftlichen Nachweises nicht bedarf. Bei einer rotierenden elektrischen Maschine ist dem Grunde nach ein Stator vorgesehen, der in der Regel eine im Wesentlichen kreisförmige Öffnung zur Aufnahme eines als Rotor ausgebildeten Läufers bereitstellt. In der Öffnung ist der Rotor drehbar gelagert angeordnet, wobei zwischen dem Rotor und dem Ständer ein Luftspalt ausgebildet ist.

Darüber hinaus gibt es elektrische Maschinen für Linearbetrieb, bei denen der Stator zumindest teilweise entlang einer Bewegungslinie oder Bewegungskurve für einen als Translator ausgebildeten Läufer ausgebildet ist. Der Translator ist in Wechselwirkung mit dem Stator und ist entlang der Bewegungslinie beziehungsweise der Bewegungskurve beweglich angeordnet. Der Translator kann mittels gesteuerter magnetischer Einwirkung entlang des Stators beziehungsweise der Bewegungslinie bewegt werden.

Ein Läufer im Sinne dieser Offenbarung ist demnach eine bewegbare Einheit, die bei einer rotierenden elektrischen Maschine in Form eines Rotors und bei einer elektrischen Maschine für Linearbetrieb als Translator ausgebildet ist. Der Stator ist in der Regel ortsfest gegenüber einer Vorrichtung oder einem mit dem Erdboden verbundenen Fundament angeordnet. Bei einem Fahrzeug kann der Stator beispielsweise mit einem Chassis, einem Fahrgestell oder dergleichen verbunden sein, wobei ortsfest in Bezug auf die Vorrichtung oder das Fundament verstanden werden soll. Der Läufer bildet somit gegenüber dem Stator die bewegbare Einheit.

Insbesondere bei rotierenden elektrischen Maschinen, die für den Einsatz als Torquemotoren vorgesehen sind, aber auch bei Linearmotoren für Direktantriebsanwendungen werden beim Läufer häufig Permanentmagnete eingesetzt. Derartige Magnete sind, um die gewünschte große Kraftwirkung erzeugen zu können, in der Regel gesinterte Seltenerdmagnete. Aufgrund der hohen Kosten solcher Magnete kommen derartige Maschinen deshalb nur in besonderen Fällen zum Einsatz, bei denen eine derartige Investition hinreichend begründet werden kann. Es gibt jedoch viele Anwendungen, bei denen solche Maschinen ebenfalls zweckmäßig eingesetzt werden könnten, dies jedoch aufgrund der hohen Kosten nicht realisiert wird. Es besteht daher Bedarf an Alternativen, insbesondere die teuren Seltenerdmagnete, beispielsweise NdFeB-Sintermagnete, zu ersetzten.

Ein Ansatz sieht vor, derartige Magnete durch Ferritmagnete zu ersetzen. Dabei hat sich gezeigt, dass Ferritmagnete gegenüber den Seltenerdmagneten eine wesentlich geringere Energiedichte aufweisen, das heißt, einen geringeren magnetischen Fluss bereitstellen, und - beispielsweise aufgrund der erforderlichen großen Abmessungen - bei üblich vorgesehenen Konstruktionen nicht praktikabel eingesetzt werden können.

Die EP 1 850 454 A1 offenbart einen Traktionsantrieb für einen Fahrstuhl.

Die WO 2012/120485 A2 offenbart eine fluidgekühlte Windturbine.

Die DE 10 2011 000 439 A1 offenbart einene Permanentmagnetläufer für rotierende elektrische Maschinen und ein Verfahren zur Ausrichtung und Befestigung der Läuferpole auf einem Läufergrundkörper des Permanentmagnetläufers.

Es ist deshalb die Aufgabe der Erfindung, einen Läufer für eine elektrische Maschine anzugeben, bei der die teuren Seltenerdmagnete durch Ferritmagnete ersetzt werden können, wobei die Leistungsfähigkeit der elektrischen Maschine im Wesentlichen beibehalten werden soll.

Als Lösung schlägt die Erfindung einen Läufer gemäss Anspruch 1 sowie eine elektrische Maschine gemäß Anspruch 11 vor. Weitere Ausgestaltungsformen der Erfindung sind in den abhängigen Ansprüchen definiert.

Eine elektrische Maschine ist eine Vorrichtung, die elektrische Energie in mechanische Energie, insbesondere Bewegungsenergie (Motorbetrieb) und/oder mechanische Energie in elektrische Energie (Generatorbetrieb) umformt.

Eine rotierende elektrische Maschine ist eine elektrische Maschine, bei der ein Ständer eine in der Regel kreisförmige Öffnung bereitstellt, in der ein Läufer drehbar gelagert angeordnet ist. Der Ständer ist im Unterschied zum Läufer drehfest angeordnet, weshalb der Ständer beispielsweise mit einer Auflage wie einem Fundament oder dergleichen verbunden ist, sodass er in der Regel keine Drehbewegung ausführt. Gleichwohl können die elektrische Maschine und demzufolge auch der Ständer natürlich mobil angeordnet sein, beispielsweise auf einem Fahrzeug oder dergleichen.

Der Ständer und der Läufer sind mittels eines magnetischen Flusses verkettet, wodurch im Motorbetrieb eine Kraftwirkung erzeugt wird, die den Läufer gegenüber dem Ständer drehend antreibt, und im Generatorbetrieb dem Läufer zugeführte mechanische Energie in elektrische Energie umgewandelt wird. Zu diesem Zweck weisen der Ständer und der Läufer jeweils eine von einem Strom durchflossene Wicklung auf. Im Ständer oder im Läufer kann die Wicklung auch durch einen Permanentmagneten gebildet oder ergänzt sein. Rotierende elektrische Maschinen der gattungsgemäßen Art sind beispielsweise Drehfeldmaschinen, die an ein mehrphasiges, insbesondere dreiphasiges elektrisches Netz angeschlossen sind, wie Asynchronmaschinen, Synchronmaschinen mit oder ohne Dämpferkäfig oder dergleichen. Es können aber auch Gleichstrommaschinen sein, wie zum Beispiel Nebenschlussmaschinen, Reihenschlussmaschinen, Schrittmotoren, und/oder dergleichen.

Durch die Erfindung wird es erstmals ermöglicht, eine elektrische Maschine mit einem permanenterregten Läufer auszurüsten, der nicht nur mit Seltenerdmagneten ausgerüstet werden kann, sondern darüber hinaus auch mit alternativen Magneten, wie Ferritmagneten oder dergleichen, wobei zugleich die vom Einsatz von Seltenerdmagneten bekannten großen Kraftwirkungen erreicht werden können. Dies wird im Wesentlichen dadurch erreicht, dass im Unterschied zum Stand der Technik die Pole der Magnete nicht mehr in Richtung Luftspalt ausgerichtet sind, sondern quer dazu, d. h. parallel zu einer dem Stator der elektrischen Maschine zugewandten Oberfläche des Läufers. Mittels des Polschuhs wird erreicht, dass der durch den Magneten bereitgestellte magnetische Fluss in Richtung Stator umgelenkt wird. Diese Konstruktion ermöglicht es somit, Magnete mit quasi beliebigen Abmessungen in den Läufer der elektrischen Maschine zu integrieren. Dadurch wird die Möglichkeit geschaffen, auch gegenüber Seltenerdmagneten schwächere Magnete, insbesondere Ferritmagnete zum Einsatz zu bringen, wobei zugleich die leistungsbezogenen Eigenschaften der elektrischen Maschine im Wesentlichen beibehalten werden können.

Zu diesem Zweck weist der Läufer einen modularen Aufbau auf, der mehrere in Umfangsrichtung benachbart zueinander angeordnete Modulelemente umfasst. Vorzugsweise ist bei jedem Modulelement für jeden Pol des Magneten wenigstens ein eigener Polschuh zugeordnet. Die Modulelemente können als einzeln handhabbare Baugruppen bereitgestellt werden, die zur Bildung des Läufers in Bewegungsrichtung miteinander verbunden werden. Die Modulelemente können darüber hinaus fertigungstechnisch günstig in Serienfertigung hergestellt werden und bedarfsgerecht zum Ausbilden eines Läufers, insbesondere individuell, zusammengestellt werden. Dies erlaubt eine hohe Flexibilität hinsichtlich der Anfertigung des Läufers. Dadurch kann auf kundenspezifische Lösungen individuell reagiert werden. Dies verdeutlicht, weshalb der Freiheitsgrad für die Abmessungen des Magneten gegenüber dem Stand der Technik deutlich vergrößert werden kann.

So können auch bei Einsatz von Ferritmagneten Flussdichten erreicht werden, wie sie im Stand der Technik sonst nur mit den Seltenerdmagneten erreicht werden können. Darüber hinaus erlaubt es die Erfindung, bei gleichzeitigem Einsatz von Seltenerdmagneten erheblich höhere Flussdichten als bisher im Stand der Technik üblich, zu erreichen. Dadurch können sehr kompakte und leistungsfähige elektrische Maschinen realisiert werden.

Die Magnete können mechanisch als Quader, Stab, insbesondere Rundstab, Kombinationen hiervon oder dergleichen ausgebildet sein. In der Regel sind die magnetischen Pole des Magneten an gegenüberliegenden Enden des Magneten ausgebildet.

Die Magnete können aus einem Ferritwerkstoff wie Eisenoxid oder dergleichen gebildet sein. Sie können sowohl als Ferritmagnete ohne Seltenerdzusatz als auch als höherwertige LaCo3-Ferrite ausgebildet sein. Letztere ermöglichen höhere Kraftdichten. Die Magnete können bereits vor dem Montage magnetisiert sein. Darüber hinaus können sie aber auch erst nach einer Montage des Läufers, beispielsweise wenn die Modulelemente und/oder Rotorsegmente am Läufer zusammengefügt werden oder dergleichen, mit ihrer Magnetisierung versehen werden. Insbesondere kann die Magnetisierung der Magnete am vollständig zusammengefügten Läufer erfolgen.

Der Polschuh ist ein magnetischer Leiter, vorzugsweise aus einem ferromagnetischen beziehungsweise weichmagnetischen Werkstoff, und dadurch zur Führung von magnetischen Flüssen besonders geeignet. Der Polschuh kann der Polschuh in axialer Erstreckung des Läufers geblecht ausgeführt sein. Dadurch kann er den magnetischen Fluss verlustarm führen. Besonders vorteilhaft ist der Polschuh aus einem Soft Magnetic Composite (SMC) - Material gebildet, wodurch ein besonders hoher Wirkungsgrad bezüglich der Führung des magnetischen Flusses erreicht werden kann.

Gemäß einer Ausgestaltung weist der Läufer wenigstens ein Rotorsegment auf, das mehrere benachbart angeordnete Modulelemente umfasst. Dadurch lässt sich eine Läufersegmentanordnung schaffen, bei der auf dem Läufer in Umfangsrichtung eine geeignete Anzahl von Rotorsegmenten angeordnet ist, die einen magnetisch aktiven Bereich des Läufers bilden. Dadurch kann der Läufer auf einfache Weise flexibel, insbesondere individuell erstellt werden. Die Rotorsegmente können als eigene Baueinheiten gehandhabt werden.

Vorzugsweise weist der Polschuh eine Kontaktfläche zur Kontaktierung eines Pols des Magneten auf. Dadurch kann das Magnetfeld des Magneten möglichst verlustfrei gesammelt und zur äußeren Oberfläche des Läufers, das heißt, in den Luftspalt der elektrischen Maschine, umgelenkt werden.

Weiterhin verjüngt sich der Polschuh ausgehend von einer einem Stator der elektrischen Maschine zugewandten Oberfläche des Läufers. Dadurch kann der Polschuh kostengünstiger ausfallen, und es kann Gewicht eingespart werden. Aus elektromagnetischer Sicht ist nämlich nicht der volle Querschnitt des Polschuhs über die gesamte Polfläche des Magneten erforderlich, da der Polschuh an der stator-zugewandten Oberfläche den gesamten Fluss des Magneten im Wesentlichen führen soll, der sich jedoch mit abnehmender Tiefe in den Läufer hinein reduziert. Je weiter man sich also von der stator-zugewandten Oberfläche des Läufers entfernt, desto weniger Fluss muss durch den Polschuh geführt werden. Weiterhin ist vorgesehen, dass sich der Polschuh über einen Teil der Kontaktfläche des Pols erstreckt. Dadurch wird ein Überhang des Magneten an der vom Luftspalt abgewandten Seite innerhalb des Läufers erzeugt. Dies reduziert die Ausbildung unerwünschter magnetischer Streupfade an der Oberfläche des Magneten zwischen den Polen, insbesondere innerhalb des Läufers. Auf diese Weise lässt sich der magnetische Fluss des Magneten mit sehr geringem Verlust mit dem Stator verketten, sodass insbesondere bei Torquemotoren hohe Kraftdichten erreicht werden können.

Der Polschuh kann stanzpaketierte Blechkörper aufweisen, die quer zur Bewegungsrichtung gestapelt sind. Dadurch lässt sich eine einfache Konstruktion des Polschuhs erreichen, die darüber hinaus ein hohes Maß an Flexibilität hinsichtlich individueller Anpassungen ermöglicht. Die stanzpaketierten Blechkörper können mittels Klebeverbindung an dem entsprechenden Magneten kraft- und/oder formschlüssig befestigt sein.

Darüber hinaus kann der Polschuh auch aus einem Sinterkörper und/oder einem amorphen Metall bestehen. Beide Werkstoffe ermöglichen, dass die Reduktion von Eisenverlusten in den Polschuhen verbessert werden kann.

Vorteilhaft kann darüber hinaus vorgesehen sein, dass der Polschuh statorseitig einen Haltevorsprung für den Magneten aufweist. Hierdurch kann eine zusätzliche Fixierung der Magneten erreicht werden, und so die Stabilität des Rotors insgesamt auch bei hohen Beanspruchungen verbessert werden. Insbesondere bei Ausbildung von Rotoren können radiale Kräfte aufgrund der Rotation des Läufers besser abgefangen werden.

Vorzugsweise bilden zwei benachbarte Polschuhe zweier benachbarter Module einen Raum, in dem eine Fixiervorrichtung angeordnet ist. Besonders vorteilhaft erweist sich diese Ausgestaltung in Kombination mit sich verjüngenden Polschuhen, bei denen der gebildete Raum umfangreiche konstruktive Maßnahmen für die Fixiervorrichtung ermöglicht. Dadurch lässt sich eine zusätzliche Festigkeit des Läufers erreichen, insbesondere eine zusätzliche Festigkeit in axialer Richtung.

Die Fixiervorrichtung kann gemäß einer weiteren Ausgestaltung mittels Endplatten in ihrer Position fixiert sein. Dies erleichtert die Montage und schafft zugleich eine weitere Verbesserung der Festigkeit. Der Polschuh und der Magnet sind an einer Tragstruktur befestigt. Die Tragstruktur kann nicht nur als Montagehilfe für die bewegbare Einheit dienen, sondern sie kann darüber hinaus auch eine zusätzliche Festigkeit bereitstellen. Darüber hinaus kann die Tragstruktur die Position der Modulelemente zueinander weiter stützen. Insbesondere kann die Tragstruktur bei einem Rotor ergänzend dazu dienen, radiale Kräfte der Modulelemente aufzunehmen und so die mechanische Stabilität des Rotors weiter zu verbessern. Die Tragstruktur kann ferner dazu dienen, die vom Läufer bereitgestellte Kraft oder Bewegung für einen bestimmungsgemäßen Gebrauch bereitzustellen. An ihr kann ein anzutreibendes Bauteil angeschlossen sein.

Die Tragstruktur kann quer zur Bewegungsrichtung geblecht ausgebildet sein. Dadurch ist es möglich, die Tragstruktur individuell für die jeweiligen Anforderungen angepasst auszubilden. Die Fertigung kann weiter vereinfacht, insbesondere individualisiert werden. Die Tragstruktur ist aus einem im Wesentlichen nicht ferromagnetischen oder paramagnetischen Werkstoff, vorzugsweise aus einem diamagnetischen Werkstoff gebildet. Dadurch können Streuflüsse, insbesondere innerhalb des Läufers weitgehend reduziert und ein Wirkungsgrad der elektrischen Maschine verbessert werden. Die Tragstruktur kann beispielsweise aus Aluminiumblechen, aus austenitischen Edelstahlblechen und/oder dergleichen bestehen. Darüber hinaus kann sie auch aus einer gefrästen Aluminium- oder einer gefrästen Edelstahlstruktur bestehen.

Die Tragstruktur kann eine Ausformung mit einer hinterschnittenen Ausnehmung zur Aufnahme eines Nutensteins aufweisen. Die Nutensteine können beispielsweise genormte Nutensteine nach DIN sein. Mittels der Nutensteine können Modulelemente oder auch Gruppen von Modulelementen befestigt werden, um so eine Verbindung des Läufers mit dem anzutreibenden Bauteil zu bilden.

Die Befestigung des Polschuhs und des Magneten an der Tragstruktur kann ein aushärtendes Vergussmaterial umfassen. So lässt sich eine einfache und stabile Montage erreichen.

Ferner kann die Befestigung einen am Polschuh angeordneten Vorsprung aufweisen, der in eine Haltenut der Tragstruktur eingreift. Dadurch lässt sich die Festigkeit des Läufers weiter verbessern. Insbesondere kann bei einem Rotor die Aufnahme radialer Kräfte weiter verbessert werden.

Der Läufer kann ferner ein Fixierelement aufweisen, das sich durch die Tragstruktur erstreckt. Vorzugsweise kann das Fixierelement zwischen zwei benachbarten Polschuhen ergänzend vorgesehen sein, und durch die Tragstruktur verlaufen. Dies erlaubt es, die Festigkeit des Läufers weiter zu verbessern.

Gemäß einer weiteren Ausgestaltung wird vorgeschlagen, dass der wenigstens eine Magnet und der wenigstens eine Polschuh des Modulelements mit einer Vergussmasse kraft- und/oder formschlüssig aneinander gefügt sind. Auf diese Weise lässt kostengünstig ein Modulelement schaffen, das als Bauteil handhabbar ist und eine hohe Flexibilität in der Herstellung des Läufers erlaubt. Ferner kann ein Verbund mit hoher Festigkeit erzeugt werden. Als Vergussmasse kann beispielsweise 2k-Polyurethan, 2k-Epoxidharz oder ein vergleichbarer Werkstoff zum Einsatz kommen.

Eine Weiterbildung der Erfindung sieht vor, dass die Modulelemente mit der Vergussmasse kraft- und formschlüssig an die Tragstruktur gefügt sind. Als Vergussmasse kann ein Werkstoff, wie zuvor bezüglich des Modulelements beschrieben, verwendet werden. Dadurch kann eine einfache Befestigung der Modulelemente an der Tragstruktur erreicht werden, die zugleich eine hohe Festigkeit bereitstellen kann.

Eine weitere Ausgestaltung sieht vor, dass die Tragstruktur aus einem unmagnetischen Metall, insbesondere aus einem unmagnetischen Leichtmetall, vorzugsweise aus Aluminium gebildet ist. Durch das unmagnetische Metall kann ein Einfluss der Tragstruktur auf die magnetischen Eigenschaften des Läufers im bestimmungsgemäßen Betrieb klein gehalten werden. Der Einsatz eines Leichtmetalls wie Aluminium erlaubt es zugleich, die physikalische Masse des Läufers gering zu halten.

Ferner kann gemäß einer Ausgestaltung die Tragstruktur in axialer Erstreckung des Läufers aus gestapelten Blechen gebildet sein. Dadurch kann der Einfluss der Tragstruktur auf die magnetischen Eigenschaften des Läufers im bestimmungsgemäßen Betrieb weiter reduziert werden. Noch günstiger erweist es sich, wenn die gestapelten Bleche gemäß einer Weiterbildung gegeneinander elektrisch isoliert sind, beispielsweise indem sie an ihrer Oberfläche mit einer isolierenden Lackschicht, einer isolierenden Oxidschicht und/oder dergleichen versehen sind. Vorzugsweise weisen die Bleche eine Dicke von etwa 1mm bis etwa 10mm auf.

Mit der Erfindung wird ferner eine elektrische Maschine mit einem Stator und einem Läufer gemäss Anspruch 11 vorgeschlagen. Dadurch lässt sich eine kostengünstige, leistungsfähige elektrische Maschine erreichen. Insbesondere kann der Einsatz von Seltenerdmagneten reduziert oder auch vermieden werden.

Weitere Merkmale und Vorteile sind der folgenden Beschreibung eines Ausführungsbeispiels zu entnehmen. Die Beschreibung dient lediglich zur Erläuterung der Erfindung und soll diese nicht beschränken.

Es zeigen:
- FIG 1: eine Seitenansicht eines schematisch linearisiert dargestellten Rotorsegments einer Rotorsegmentanordnung für einen Läufer des Stands der Technik,
- FIG 2: eine Schnittdarstellung durch ein schematisch linearisiert dargestelltes Rotorsegment einer Rotorsegmentanordnung für einen Läufer mit einem modularen Aufbau gemäß der Erfindung,
- FIG 3: eine vergrößerte schematische Ausschnittsdarstellung der Tragstruktur in FIG 2 mit einem Montagekonzept für die erfindungsgemäße Rotorsegmentanordnung und
- FIG 4: schematisch eine Querschnittsdarstellung durch eine rotierende elektrische Maschine mit einem Läufer mit einer Rotorsegmentanordnung gemäß FIG 2 der Erfindung.

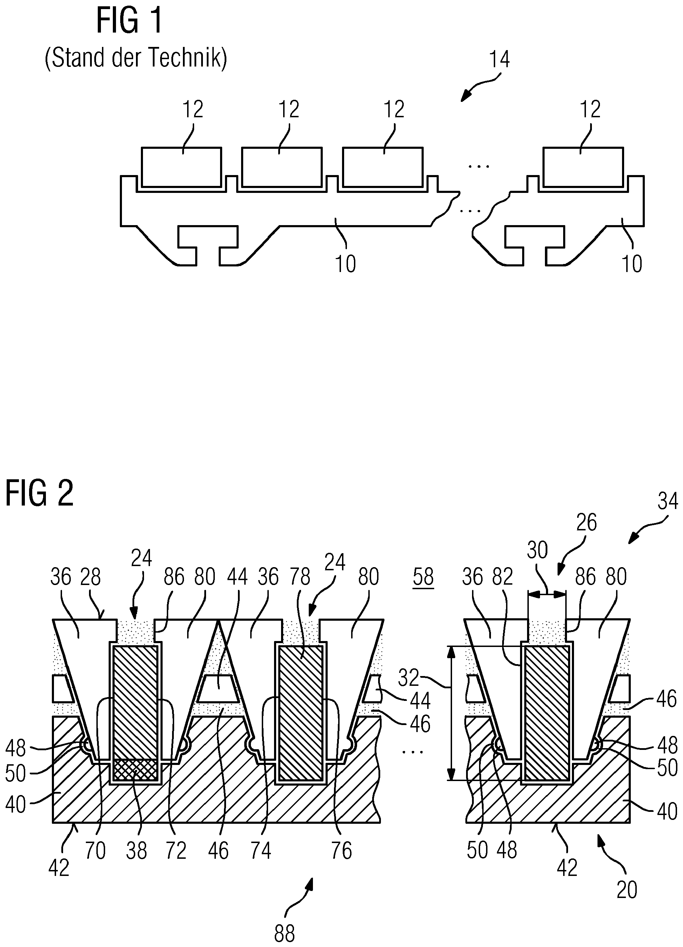

In FIG 1 ist in schematischer Seitenansicht ein Ausschnitt aus einem als Rotor 14 ausgebildeten Läufer einer nicht weiter dargestellten rotierenden elektrischen Maschine des Stands der Technik dargestellt. Der Rotor 14 weist eine nicht bezeichnete Rotorsegmentanordnung auf, von der ein Rotorsegment in FIG 1 schematisch ausschnittsweise in Seitenansicht dargestellt ist. Zur weiteren Vereinfachung ist die Krümmung in der Fig 1 ebenfalls nicht dargestellt.

Das Rotorsegment weist eine Tragstruktur 10 auf, die an ihrer statorzugewandten Oberfläche mit stabförmigen Seltenerdmagneten 12 bestückt ist. Die Pole der Seltenerdmagnete 12 sind radial ausgerichtet, das heißt, dass jeweils ein Pol eines Magneten 12 dem Luftspalt zugewandt ist, wobei abwechselnd in Bewegungsrichtung Nord- und Südpol benachbarter Magnete 12 aufeinander folgen. Auf den Einbau des Rotors 14 in der elektrischen Maschine sowie die Wirkungsweise dieser bekannten Maschine soll hier nicht weiter eingegangen werden, zumal dies dem Fachmann hinlänglich bekannt ist.

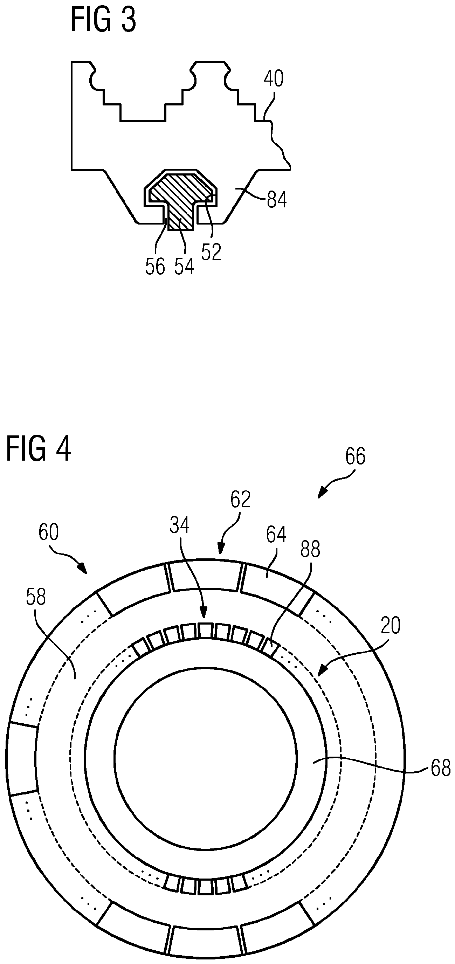

FIG 2 zeigt in perspektivischer Schnittdarstellung ausschnittsweise einen als Rotor ausgebildeten Läufer 20, der eine Rotorsegmentanordnung 34 (FIG 4) aufweist, von der ein Segment 88 ausschnittsweise in schematischer Schnittdarstellung in FIG 2 gezeigt ist. Der Rotor 20 ist Bestandteil einer rotierenden elektrischen Maschine in Form eines Torquemotors 66 (FIG 4) und über einen Luftspalt 58 von einem Stator 62 beabstandet. Auch hier ist in der Figur die rotorbedingte Krümmung nicht dargestellt.

Das in FIG 2 dargestellte Rotorsegment 88 weist einen modularen Aufbau auf und besteht aus einer Anzahl von Modulelementen 26 gemäß der Erfindung, die in Bewegungsrichtung benachbart zueinander angeordnet sind.

Jedes Modulelement 26 weist in dieser Ausgestaltung einen Ferritmagneten 22, 78 und zwei ferromagnetische Polschuhe 36, 80 auf. Die Polschuhe 36, 80 sind vorliegend aus einem SMC-Material gebildet. Der Ferritmagnet 22 weist einen Nordpol 70 und einen Südpol 72 auf, wohingegen der Ferritmagnet 78 einen Südpol 74 und einen Nordpol 76 aufweist. Die Pole 70, 72, 74, 76 der Ferritmagnete 22, 78 sind in Bewegungsrichtung ausgerichtet. Die Pole der Ferritmagnete 22, 78 sind also entgegengesetzt zueinander ausgerichtet. Anders als beim Stand der Technik sind bei der Erfindung folglich keine Magnetpole der Magnete dem Stator direkt zugewandt. Die Ferritmagnete 22, 78 haben in dieser Ausgestaltung eine Magnethöhe 32. Diese kann in Abhängigkeit des gewünschten magnetischen Flusses gewählt werden.

Jeder Polschuh 36, 80 weist eine Kontaktfläche 82 auf, die in dieser Ausgestaltung den jeweiligen Pol 70, 72, 74, 76 der Ferritmagneten 22, 78 kontaktiert. Dadurch kann der magnetische Fluss des jeweiligen Magneten weitgehend verlustfrei in den Polschuh 36, 80 eingeleitet werden.

An ihren dem Luftspalt 58 zugewandten Enden der Polschuhe 36, 80 wird der magnetische Fluss von den Polschuhen 36, 80 in den Luftspalt ausgeleitet. Der magnetische Fluss ist somit radial in Richtung Stator gerichtet. Die Polschuhe 36, 80 bewirken folglich ein Umlenken und Führen des magnetischen Flusses von den jeweiligen Polen zum Luftspalt 58.

Der Ferritmagnet 22, 78 sowie die ihm zugeordneten Polschuhe 36, 80 sind - das jeweilige Modulelement 26 bildend - mittels einer Vergussmasse 46 miteinander verbunden. Als Vergussmasse 46 wird vorliegend 2k-Polyurethan verwendet. Es kann aber auch eine alternative Vergussmasse zum Einsatz kommen, wie beispielsweise 2k-Epoxidharz oder dergleichen. Ferner sind die Modulelemente 26 mittels der Vergussmasse 46 zu dem jeweiligen Rotorsegment 88 verbunden.

FIG 2 ist ferner zu entnehmen, dass sich die Polschuhe 36, 80 ausgehend von einer dem Stator 62 des Torquemotors 66 zugewandten Oberfläche 28 des Rotors 20 verjüngen. Wie ferner aus FIG 2 ersichtlich ist, erstrecken sich die Polschuhe 36, 80 über einen Teil der Kontaktfläche 70, 72, 74, 76, sodass die Ferritmagnete 22, 78 einen Magnetüberhang gegenüber den Polschuhen 36, 80 an der dem Luftspalt 58 gegenüberliegenden Seite ausbilden. Dadurch können die Polschuhe 36, 80 insgesamt kleiner und kompakter ausgebildet werden.

Alternativ können die Polschuhe 36, 80 stanzpaketierte Blechkörper aufweisen, die quer zur Bewegungsrichtung des Rotors 20 gestapelt sind. Dadurch lassen sich die Polschuhe 36, 80 bedarfsgerecht auf beliebige Maschinenausführungen der elektrischen Maschine anpassen. Darüber hinaus können die Polschuhe 36, 18 aus einem amorphen Metall bestehen.

Durch die in dieser Ausgestaltung vorgesehene Anordnung der Ferritmagnete 22, 78 bilden jeweils zwei benachbarte Polschuhe 36, 80 zweier benachbarter Modulelemente 26 gemeinsam einen magnetischen Pol an der rotorseitigen Oberfläche 28 des Rotors 20.

Wie ferner aus FIG 2 ersichtlich ist, weisen die Polschuhe 36, 80 in der Nähe der rotorseitigen Oberfläche 28 jeweils einen Haltevorsprung 86 für die Ferritmagneten 22, 78 auf. Gerade bei der rotierenden elektrischen Maschine kann für den Rotor 20 erreicht werden, dass eine zusätzliche Aufnahme radialer Kräfte im bestimmungsgemäßen Betrieb gewährleistet ist. Die Stabilität und Festigkeit des Rotors 20 kann insgesamt weiter erhöht werden.

Weiterhin ist aus FIG 2 ersichtlich, dass jeweils zwei benachbarte Polschuhe 36, 80 zweier benachbarter Modulelemente 26 einen Raum ausbilden, in dem eine Fixiervorrichtung 44 angeordnet ist. Durch die Fixiervorrichtung 44 kann dem Rotorsegment der Rotorsegmentanordnung 34 zusätzliche axiale Festigkeit verliehen werden.

Die Polschuhe 36, 80 eines jeweiligen Modulelements 26 bilden in dieser Ausgestaltung an der rotorseitigen Oberfläche 28 eine Öffnung mit einer Öffnungsbreite 30. Dies reduziert Streuflüsse im Bereich der rotorseitigen Oberfläche 28, wodurch die magnetische Verkettung beim Torquemotor 66 insgesamt verbessert wird.

In den Figuren nicht dargestellt ist, dass die Fixiervorrichtung 44 mittels Endplatten in ihrer Position fixiert ist.

FIG 2 zeigt ferner, dass die Polschuhe 36, 80 und die Ferritmagnete 22, 78 an einer Tragstruktur 40 aus Aluminium des Rotors 20 befestigt sind. Alternativ kann die Tragstruktur auch aus einem anderen nicht-magnetischen Metall, insbesondere Leichtmetall gebildet sein. Die Tragstruktur 40 weist eine innenseitige Oberfläche 42 auf, die mit einem nicht dargestellten, anzutreibenden Bauteil verbunden werden kann. Zu diesem Zweck weist die Tragstruktur 40 an der innenseitigen Oberfläche 42 einen Überhang 84 auf, in dem eine Ausnehmung 56 in Form einer Längsnut in axialer Richtung eingebracht ist (FIG 3). Die Längsnut 56 weist eine Hinterschneidung 52 auf, sodass sie zur Aufnahme von Nutensteinen 54 geeignet ist. Über die Nutensteine 54 ist das nicht dargestellte anzutreibende Bauteil mit dem Rotor 20 verbindbar. Hierdurch ist eine zuverlässige Befestigung mit dem anzutreibenden Bauteil auf einfache Weise erreichbar.

Vorliegend ist die Tragstruktur 40 quer zur Bewegungsrichtung des Läufers 20 geblecht ausgebildet. Dadurch ist es möglich, die Tragstruktur 40 an die jeweiligen Maschinenerfordernisse auf einfache Weise anzupassen.

Um einen möglichst hohen Wirkungsgrad des Torquemotors 66 erreichen zu können, ist ferner vorgesehen, dass die Tragstruktur 40 aus einem im Wesentlichen nicht ferromagnetischen oder paramagnetischen Werkstoff, vorzugsweise aus einem diamagnetischen Werkstoff gebildet ist. In der vorliegenden Ausgestaltung ist die Tragstruktur aus einer gefrästen Aluminiumstruktur gebildet. Alternativ kann die Tragstruktur 40 auch aus einer gefrästen Edelstahlstruktur aus beispielsweise austenitischen Edelstahlblechen gefertigt sein.

Die Ferritmagnete 22, 78 sind vorliegend aus einem Ferritwerkstoff gebildet. Sie können natürlich auch mit einem Seltenerdzusatz versehen sein, wodurch sich höhere Kraftdichten erreichen lassen.

Die Befestigung der Bauteile der Modulelemente 26 kann ferner mittels Vergießen unter Verwendung von Kunstharz als Vergussmasse 46 erreicht werden. Darüber hinaus kann die Befestigung auch durch Tauchen in einem Bad aus Lack, Harz oder dergleichen erreicht werden.

Zur weiteren Verbesserung der Festigkeit und Stabilität des Rotors 20 weist die Befestigung an jedem der Polschuhe 36, 80 jeweils einen angeordneten Vorsprung 48 auf, der in einer Haltenut 50 der Tragstruktur 40 eingreift.

FIG 4 zeigt in einer schematischen Schnittdarstellung den Torquemotor 66, der den Stator 62 und den innerhalb des Stators 62 drehbar gelagerten Rotor als Läufer 20 aufweist. Der Stator 62 ist ebenfalls wie der Rotor 20 segmentiert ausgebildet und weist Statorsegmente 64 auf, die in Umfangsrichtung des Torquemotors 66 benachbart zueinander angeordnet sind. Hierdurch wird eine Statorsegmentanordnung 60 des Torquemotors 66 gebildet. Ferner ist zwischen der äußeren rotorseitigen Oberfläche 28 des Rotors 20 und einer Innenoberfläche der Statorsegmentanordnung 60 der Luftspalt 58 ersichtlich. Die Rotorsegmente 88 sind vorliegend mittels der Vergussmasse 46 an der Tragstruktur befestigt.

Die Beschreibung des Ausführungsbeispiels dient lediglich der Erläuterung der Erfindung und soll diese nicht beschränken. Insbesondere kann die Erfindung natürlich sowohl bei rotierenden elektrischen Maschinen als auch bei elektrischen Maschinen für Linearbetrieb zum Einsatz kommen.

## Patentansprüche

1. Läufer (20) für eine elektrische Maschine (66), mit einem modularen Aufbau aus mehreren, in Bewegungsrichtung benachbart zueinander angeordneten Modulelementen (26), die zur Bildung des Läufers (20) in Bewegungsrichtung miteinander verbunden sind, wobei jedes Modulelement (26) wenigstens einen Magneten (22, 78) und zwei ferromagnetische Polschuhe (36, 80) aufweist und die Pole (70, 72, 74, 76) des Magneten (22, 78) in Bewegungsrichtung des Läufers (20) ausgerichtet sind, wobei der Polschuh (36, 80), der Magnet (22, 78) und/oder die Modulelemente (26) an einer Tragstruktur (40) des Läufers (20) befestigt sind, wobei sich die jeweils zwei Polschuhe (36, 80) eines Modulelements (26) ausgehend von einer einem Stator (62) der elektrischen Maschine (66) zugewandten Oberfläche (28) des Läufers (20) verjüngen, **dadurch gekennzeichnet, dass** die Tragstruktur (40) aus einem im Wesentlichen nicht ferromagnetischen oder paramagnetischen Werkstoff, vorzugsweise aus einem diamagnetischen Werkstoff gebildet ist und sich der Polschuh (36, 80) über einen Teil der Kontaktfläche des Pols (70, 72, 74, 76) erstreckt, sodass der Magnet (22, 78) einen Überhang (38) gegenüber dem Polschuh (36, 80) an einer dem Luftspalt (58) gegenüberliegenden Seite ausbildet, wobei der Magnet (22, 78) aus einem Ferritwerkstoff wie Eisenoxid oder dergleichen gebildet ist.

2. Läufer nach Anspruch 1, **dadurch gekennzeichnet, dass** der Läufer (20) wenigstens ein Rotorsegment (88) aufweist, das mehrere benachbart angeordnete Modulelemente (26) umfasst.

3. Läufer nach Anspruch 1 oder 2, **dadurch gekennzeichnet, dass** der Polschuh (36, 80) eine Kontaktfläche (82) zur Kontaktierung eines Pols (70, 72, 74, 76) des Magneten (22, 78) aufweist.

4. Läufer nach einem der Ansprüche 1 bis 3, **dadurch gekennzeichnet, dass** der Polschuh (36, 80) statorseitig einen Haltevorsprung (86) für den Magneten (22, 78) aufweist.

5. Läufer nach einem der Ansprüche 1 bis 4, **dadurch gekennzeichnet, dass** zwei benachbarte Polschuhe (36, 80) zweier benachbarter Modulelemente (26) einen Raum bilden, in dem eine Fixiervorrichtung (44) angeordnet ist.

6. Läufer nach einem der Ansprüche 1 bis 5, **dadurch gekennzeichnet, dass** die Befestigung einen am Polschuh (36, 80) angeordneten Vorsprung (48) aufweist, der in eine Haltenut (50) der Tragstruktur (40) eingreift.

7. Läufer nach einem der Ansprüche 1 bis 6, **dadurch gekennzeichnet, dass** der wenigstens eine Magnet (22, 78) und der wenigstens eine Polschuh (36, 80) des Modulelements (26) mit einer Vergussmasse (46) kraft- und/oder formschlüssig aneinander gefügt sind.

8. Läufer nach einem der Ansprüche 1 bis 7, **dadurch gekennzeichnet, dass** die Modulelemente (26) mit der Vergussmasse (46) kraft- und formschlüssig an die Tragstruktur (40) gefügt sind.

9. Läufer nach einem der Ansprüche 1 bis 8, **dadurch gekennzeichnet, dass** die Tragstruktur (40) aus einem unmagnetischen Metall, insbesondere aus einem unmagnetischen Leichtmetall, vorzugsweise aus Aluminium gebildet ist.

10. Läufer nach einem der Ansprüche 1 bis 9, **dadurch gekennzeichnet, dass** die Tragstruktur (40) in axialer Erstreckung des Läufers (20) aus gestapelten Blechen gebildet ist.

11. Elektrische Maschine (66) mit einem Stator (62) und einem Läufer (20), **dadurch gekennzeichnet, dass** der Läufer (20) nach einem der Ansprüche 1 bis 10 ausgebildet ist.

## Claims

1. Rotor (20) for an electric machine (66), with a modular structure comprising a plurality of modular elements (26) that are arranged adjacently to each other in a direction of movement and are connected to each other in the direction of movement to form the rotor (20), wherein each modular element (26) has at least one magnet (22, 78) and two ferromagnetic pole shoes (36, 80) and the poles (70, 72, 74, 76) of the magnet (22, 78) are aligned in the direction of movement of the rotor (20), wherein the pole shoe (36, 80), the magnet (22, 78) and/or the modular elements (26) are fastened to a support structure (40) of the rotor (20), wherein the two pole shoes (36, 80) of a modular element (26) in each case taper, starting from a surface (28) of the rotor (20) facing a stator (62) of the electric machine (66), **characterised in that** the support structure (40) is made of an essentially non-ferromagnetic or paramagnetic material, preferably of a diamagnetic material, and the pole shoe (36, 80) extends over part of the contact surface of the pole (70, 72, 74, 76), so that the magnet (22, 78) forms an overhang (38) opposite the pole shoe (36, 80) on a side opposite the air gap (58), wherein the magnet (22, 78) is made of a ferrite material such as iron oxide or the like.

2. Rotor according to claim 1, **characterised in that** the rotor (20) has at least one rotor segment (88) which comprises a plurality of adjacent modular elements (26).

3. Rotor according to claim 1 or 2, **characterised in that** the pole shoe (36, 80) has a contact surface (82) for contacting a pole (70, 72, 74, 76) of the magnet (22, 78).

4. Rotor according to one of claims 1 to 3, **characterised in that** the pole shoe (36, 80) has a retaining projection (86) on the stator side for the magnets (22, 78).

5. Rotor according to one of claims 1 to 4, **characterised in that** two adjacent pole shoes (36, 80) of two adjacent modular elements (26) form a space in which a fixing device (44) is arranged.

6. Rotor according to one of claims 1 to 5, **characterised in that** the fastening has a projection (48) arranged on the pole shoe (36, 80) which engages in a stop notch (50) of the support structure (40).

7. Rotor according to one of claims 1 to 6, **characterised in that** at least one magnet (22, 78) and at least one pole shoe (36, 80) of the modular element (26) are joined together frictionally and/or positively with grout (46).

8. Rotor according to one of claims 1 to 7, **characterised in that** the modular elements (26) are joined frictionally and positively to the support structure (40) with the grout (46).

9. Rotor according to one of claims 1 to 8, **characterised in that** the support structure (40) is made of a non-magnetic metal, in particular of a non-magnetic light metal, preferably of aluminium.

10. Rotor according to one of claims 1 to 9, **characterised in that** the support structure (40) is formed of stacked sheets in an axial extension of the rotor (20).

11. Electric machine (66) with a stator (62) and a rotor (20), **characterised in that** the rotor (20) is designed according to one of claims 1 to 10.

## Revendications

1. Rotor ( 20 ) pour une machine ( 66 ) électrique, ayant une structure modulaire composée de plusieurs éléments ( 26 ) de module disposés au voisinage les uns des autres dans une direction de déplacement et reliés entre eux dans la direction de déplacement pour former le rotor ( 20 ), chaque élément ( 26 ) de module ayant au moins un aimant ( 22, 78 ) et deux épanouissements ( 36, 80 ) polaires ferromagnétiques et les pôles ( 70, 72, 74, 76 ) de l'aimant ( 22, 78 ) étant dirigés dans la direction de déplacement du rotor ( 20 ), l'épanouissement ( 36, 80 ) polaire, l'aimant ( 22, 78 ) et/ou les éléments ( 26 ) de module étant fixés à une structure ( 40 ) porteuse du rotor ( 20 ), les deux épanouissements ( 36, 80 ) polaires d'un élément ( 26 ) de module se rétrécissant à partir d'une surface ( 28 ) du rotor ( 20 ) tournée vers un stator ( 62 ) de la machine ( 66 ) électrique, **caractérisé en ce que** la structure ( 40 ) porteuse est en un matériau sensiblement ni ferromagnétique, ni paramagnétique, de préférence en un matériau diamagnétique, et l'épanouissement ( 36, 80 ) polaire s'étend sur une partie de la surface de contact du pôle ( 70, 72, 74, 76 ), de manière à ce que l'aimant ( 22, 78 ) forme un surplomb ( 38 ) par rapport à l'épanouissement ( 36, 80 ) polaire d'un côté opposé à l'entrefer ( 58 ), l'aimant ( 22, 78 ) étant en un matériau de ferrite, comme de l'oxyde de fer ou analogue.

2. Rotor suivant la revendication 1, **caractérisé en ce que** le rotor ( 20 ) a au moins un segment ( 88 ) de rotor, qui comprend plusieurs éléments ( 26 ) de module disposés de manière voisine.

3. Rotor suivant la revendication 1 ou 2, **caractérisé en ce que** l'épanouissement ( 36, 80 ) polaire a une surface ( 82 ) de contact pour la mise en contact d'un pôle ( 70, 72, 74, 76 ) d'éléments ( 22, 78 ) .

4. Rotor suivant l'une des revendications 1 à 3, **caractérisé en ce que** l'épanouissement ( 36, 80 ) polaire a, du côté du stator, une saillie ( 86 ) de maintien d'éléments ( 22, 78 ).

5. Rotor suivant l'une des revendications 1 à 4, **caractérisé en ce que** deux épanouissements ( 36, 80 ) polaires voisins de deux éléments ( 26 ) de module voisins forment un espace, dans lequel est disposé un dispositif ( 44 ) d'immobilisation.

6. Rotor suivant l'une des revendications 1 à 5, **caractérisé en ce que** la fixation a une saillie ( 48 ), qui est disposée sur l'épanouissement ( 36, 80 ) polaire et qui pénètre dans une rainure ( 50 ) de maintien de la structure ( 40 ) porteuse.

7. Rotor suivant l'une des revendications 1 à 6, **caractérisé en ce que** le au moins un aimant ( 32, 78 ) et le au moins un épanouissement ( 36, 80 ) polaire de l'élément ( 26 ) de module sont joints l'un à l'autre à coopération de force et/ou à complémentarité de forme par une composition ( 36 ) de scellement.

8. Rotor suivant l'une des revendications 1 à 7, **caractérisé en ce que** les éléments ( 26 ) de module sont joints à la structure ( 40 ) porteuse à coopération de force et/ou à complémentarité de forme par la composition ( 46 ) de scellement.

9. Rotor suivant l'une des revendications 1 à 8, **caractérisé en ce que** la structure ( 40 ) porteuse est en un métal amagnétique, notamment en un métal léger amagnétique, de préférence en aluminium.

10. Rotor suivant l'une des revendications 1 à 9, **caractérisé en ce que** la structure ( 40 ) porteuse est formée dans l'étendue axiale du rotor ( 20 ) de tôle empilée.

11. Machine ( 66 ) électrique comprenant un stator ( 62 ) et un rotor ( 20 ), **caractérisée en ce que** le rotor ( 20 ) est constitué suivant l'une des revendications 1 à 10.
